# FASCICULE DE BREVET EUROPEEN

(11) **EP 1 568 913 B1**
(45) Date de publication et mention de la délivrance du brevet: **06.04.2011**
(21) Numéro de dépôt: 05002589.9
(22) Date de dépôt: 08.02.2005
(51) Int. Cl.: F16D 65/00, F16F 9/30, F16F 7/108

(54) **Amortisseur de vibrations pour freins à disques**
Schwingungsdämpfer für Scheibenbremsen
Vibration damper for disc brakes

(30) Priorité: 13.02.2004 FR 0401508
(43) Date de publication de la demande: 31.08.2005
(73) Titulaire: ROBERT BOSCH GMBH, 70442 Stuttgart (DE)
(72) Inventeur: Picot, Pascal, 77170 Brie Conte Robert (FR); Hurwic, Aleksander, 75020 Paris (FR); Fillon, Alain, 17220 Croix Chapeau (FR)
(74) Mandataire: Hurwic, Aleksander Wiktor

(56) Documents cités:
- EP-A- 0 099 559
- EP-A- 0 329 788
- EP-A- 0 486 227
- EP-A- 0 557 947
- EP-A- 0 563 555
- EP-A- 0 737 823
- DE-A- 4 141 343
- DE-A- 19 716 569
- DE-A- 19 736 275
- US-B1- 6 250 441

## Description

L'invention concerne un amortisseur de vibrations pour freins de véhicules, un piston de frein et un frein comportant un tel amortisseur.

Les véhicules à déplacement sur roues tels que les véhicules automobiles possèdent un ou plusieurs systèmes de freinage permettant de ralentir la rotation des roues et de les immobiliser. Ils possèdent ainsi couramment un système de freinage à transmission hydraulique permettant d'agir sur des moyens de freinage (disques ou tambours) qui viennent par friction limiter, en cas de freinage, la rotation des essieux du véhicule.

La transmission de la commande de freinage se fait de manière connue par un circuit hydraulique qui est rempli d'un liquide de freinage. Une commande de freinage située généralement dans le poste de conduite permet d'agir sur un système de pistons pour transmettre, aux moyens de freinage, l'effort de freinage par l'intermédiaire du liquide de freinage.

Les moyens de freinage agissent par frottement de garnitures de freins sur des organes tournants solidaires des essieux du véhicule. Ce sont, par exemple, les garnitures des plaquettes de freins qui frottent sur un disque solidaire d'un essieu.

Cependant, lorsque les garnitures de freins telles que les plaquettes de freins entrent en contact avec un organe tournant solidaire d'un essieu du véhicule tel qu'un disque de freinage, et lorsqu'il freine cet organe tournant, il peut se produire des vibrations. Ces vibrations sont plus perceptibles et gênantes à freinage modéré qu'à freinage brusque car les freinages modérés durent souvent plus longtemps, sont les plus nombreux et le conducteur du véhicule est généralement plus attentif au comportement du véhicule et au bruit qu'il fait. Par ailleurs, les freinages modérés ont lieu généralement à faible vitesse alors que le véhicule est souvent moins bruyant et que les bruits de vibrations dues au freinage sont beaucoup plus perceptibles.

Malgré les efforts pour limiter ces vibrations, l'expérience montre qu'on ne peut les éliminer et de toutes façons, le véhicule prenant de l'âge et les organes s'usant, il y aura toujours des risques de vibrations.

Une solution est donc d'amortir ces vibrations et les fréquences acoustiques qu'elles génèrent à l'ensemble du véhicule.

DE-A-4141343 montre un amortisseur de vibrations selon le préambule de la revendication 1.

L'invention fournit donc des dispositions permettant d'amortir ces vibrations.

L'invention concerne donc un amortisseur de vibrations pour freins à disque de véhicule selon la revendication 1.

Avantageusement, les éléments rigides sont plans et parallèles entre eux.

Avantageusement, le matériau non rigide placé entre les différents éléments des deux armatures possède un coefficient d'amortissement par cisaillement élevé.

Selon une variante de réalisation, l'amortisseur comporte un composant présentant une masse fixée à la deuxième armature.

Cette masse peut être fixée sur un élément de la deuxième armature opposé à ladite face du support de plaquette par rapport auxdites armatures.

L'invention concerne également un piston de frein à disques, cylindrique ouvert à une extrémité définissant une cavité entourée d'una paori latérale, une extrémité de la paroi latérale étant destinée à transmettre les efforts de freinage du pisotn au support de garniture de freib. comportant un amortisseur ainsi décrit et placé dans ladite cavité.

Avantageusement, l'amortisseur est positionné dans ladite cavité de telle façon que les éléments desdites armatures puissent être sensiblement parallèles au plan d'un disque de frein.

Avantageusement, ladite deuxième armature est fixée à l'intérieur de la cavité du piston.

Egalement avantageusement, ladite deuxième armature comporte des moyens de solidarisation avec le fond de la cavité du piston.

Le dispositif amortisseur de vibrations remplit de préférence la quasi-totalité de la cavité tout en permettant un mouvement latéral de la première armature par rapport à la deuxième armature.

L'invention concerne également un frein comportant un amortisseur et/ou un piston ainsi décrits.

Des moyens de solidarisation de la première armature à un support de garniture de frein peuvent alors être prévus.

Les différents aspects et caractéristiques de l'invention apparaîtront plus clairement dans la description qui va suivre et dans les figures annexées qui représentent :
- La figure 1, un exemple de frein à disque de véhicule selon l'invention ;
- La figure 2, un exemple de réalisation d'un dispositif amortisseur selon l'invention ;
- La figure 3, une variante de réalisation d'un dispositif amortisseur selon l'invention ;
- Les figures 4a à 4c ; des exemples de fixation d'un dispositif amortisseur à un support de plaquette de frein ;
- Les figures 5a et 5b, un exemple d'immobilisation d'une armature de l'amortisseur à l'intérieur de la cavité d'un piston de cylindre de roue.

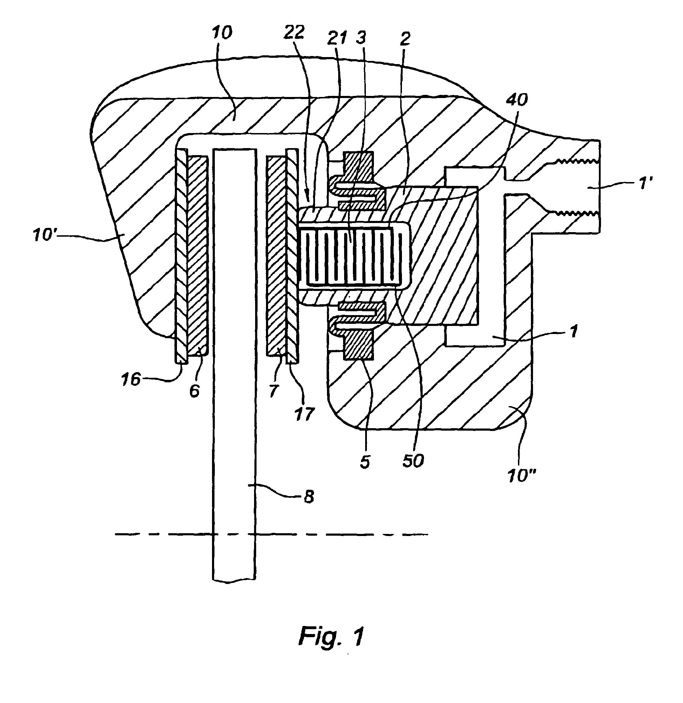

Comme cela est représenté sur la figure 1, pour chaque roue équipée de freins à disques, deux plaquettes de freins 6 et 7 sont situées de part et d'autre d'un disque de freinage 8 solidaire de la roue du véhicule et qui est donc tournant. Les plaquettes de freins 6 et 7 sont montées sur des supports de plaquettes de freins 16 et 17 qui peuvent coulisser perpendiculairement au plan du disque.

Un étrier 10 possédant un premier et un deuxième bras 10' et 10" est disposé avec ses deux bras de part et d'autre du disque de freinage. Selon un système de freins à disques courant, une première plaquette de frein 6 est montée sur un support 16 lequel est fixé sur le premier bras 10' de l'étrier de façon à pouvoir venir frotter contre un premier flanc du disque de freinage 8. Une deuxième plaquette 7 est montée sur un deuxième support de plaquette 17 entraîné par un piston 2 perpendiculairement au plan du disque de freinage. Les supports de plaquette 16 et 17 se déplacent perpendiculairement au plan du disque en restant parallèle à ce plan et la deuxième plaquette de frein 7 peut venir frotter contre un deuxième flanc du disque.

L'un des bras de l'étrier comporte un cylindre de roue 1 dans lequel se trouve le piston 2 du cylindre de roue. Le cylindre de roue est raccordé au circuit de freinage hydraulique du véhicule par une entrée 1'.

Lors de l'actionnement des freins du véhicule, le liquide est comprimé par exemple dans un maître cylindre du circuit de freinage ; l'intérieur du cylindre 1 est mis sous pression. La pression engendrée a pour effet de pousser le piston 2 vers le support de plaquette 17. Avec le type de frein à disque représenté sur la figure 1 et décrit précédemment, le piston 2 pousse le deuxième support de plaquette 17 jusqu'à ce que la plaquette 7 entre en contact avec le disque. Prenant appui sur le disque par l'intermédiaire du deuxième support de plaquette 17 et de la deuxième plaquette 7, le piston tire vers lui le premier bras 10' de l'étrier qui entraîne avec lui le premier support 16 et la premier plaquette 6. Celle-ci entre en contact avec le disque de frein. La pression dans le maître cylindre augmentant, le disque de frein est freiné par l'application des deux plaquettes de freins.

Comme on peut le voir sur la figure 1, de façon connue, le piston 2 est creux pour une question de limitation de l'inertie thermique de l'ensemble du système de freinage. En effet, un freinage se fait par frottement des plaquettes de freins sur le disque de frein. Les plaquettes de freins s'échauffent donc et la chaleur est communiquée aux supports de plaquettes, à l'étrier et au piston des cylindres de roues. On a intérêt à prévoir un refroidissement le plus rapide possible de ces différents organes. Pour cela, on diminue autant que possible leurs inerties thermiques. En ce qui concerne le piston du cylindre de roue, une solution est d'évider la partie centrale du piston. Le piston 2 agit donc sur le support de plaquette de frein par sa partie périphérique située autour de la cavité 3. Avantageusement, l'amortisseur selon l'invention, de préférence cylindrique ou sensiblement cylindrique, est placé dans la cavité 3 du piston 2 comme cela est représenté sur la figure 1.

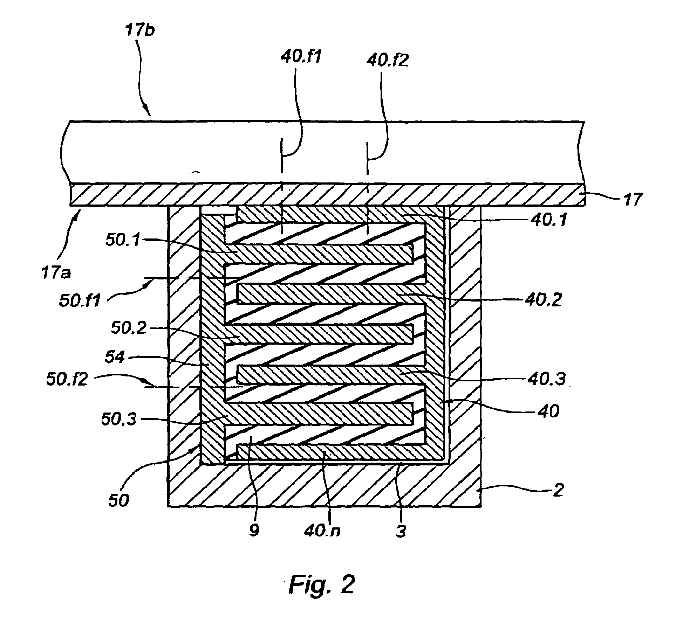

A titre d'exemple de réalisation, en se reportant à la figure 2, on va décrire l'amortisseur de vibrations selon l'invention appliqué à un tel système de freinage ainsi décrit. Toutefois, il est bien entendu que l'amortisseur selon l'invention peut être mis en oeuvre dans un frein fixe comportant deux pistons disposés en vis-à-vis de part et d'autre du disque 8.

On constate qu'une source principale de vibrations se situe au niveau des plaquettes des freins et que le piston du cylindre de freins constitue un passage des vibrations. L'invention se propose d'amortir les vibrations aussi près que possible de leur source. C'est pourquoi l'invention prévoir d'aménager dans le piston lui-même, un amortisseur de vibrations 4.

Plus précisément, on prévoit d'aménager cet amortisseur dans la cavité 3 du piston 2. Pour ne pas perdre le bénéfice procuré par un piston creux (faible inertie thermique), de préférence, l'amortisseur de vibrations sera en matériau mauvais conducteur de la chaleur ou qui, lors de l'échauffement des plaquettes de freins n'aura que très peu tendance à s'échauffer et dont les matériaux sont compatibles avec des températures régnant au niveau de la cavité 3.

Selon l'exemple de réalisation de la figure 2, un amortisseur de vibrations selon l'invention comporte une première armature 40 munie d'éléments rigides 40.1, 40.2, 40.3, 40.n, par exemple en forme de disques, solidarisés axialement rigidement entre eux par exemple au niveau de leur périphérie ainsi qu'une deuxième armature 50 similaire à la première et possédant des éléments rigides 50.1, 50.2, 50.3. Les éléments des deux armatures sont intercalés les uns entre les autres de telle façon que les éléments d'une armature ne touchent pas les éléments de l'autre armature. Un matériau non rigide 9, par exemple souple, et de préférence élastique est placé entre les différentes armatures.

Les éléments de chaque armature se présentent sous forme de plaques, de préférence planes et de forme circulaire, parallèles à la face 17a du support 17 de plaquette de frein.

La première armature 40 est fixée par un de ces éléments d'extrémité 40.1 à la face 17a du support 17 en des points de fixation tels que 40.f1 et 40.f2. Cette fixation pourrait également se faire par la quasi-totalité de la surface de l'élément 40.1. Selon le mode de réalisation représenté sur la figure, la face 17a est sensiblement parallèle à la face 17b de la garniture de frein destinée à entrer en contact avec le disque de frein.

Selon un mode de réalisation, la deuxième armature 50 est fixée dans la cavité 3 du piston 2. Par exemple, elle est fixée, par la partie commune 54 reliant les éléments 50.1 à 50.3, à la paroi latérale de la cavité 3 en des points de fixation tels que 50.f1 et 50.f2. Cette fixation pourrait également se faire sur toute la hauteur de la partie commune 54.

Un tel amortisseur n'est pas coincé dans la cavité du piston et permet un mouvement des deux armatures l'une par rapport à l'autre. Si on désigne par 40.i un élément de la première armature et par 40(i+1) 40(i-1) les éléments voisins ainsi que par 50i un élément de la deuxième armature et par 50(i+1) et 50(i-1) les éléments voisins, les surfaces en vis-à-vis des éléments 40.i-50.i, 40. (i-1)-50.i et/ou 40.i-50. (i+1) des deux armatures sont liées par le matériau non rigide qui va donc travailler en cisaillement.

Le nombre d'éléments de chaque armature peut être de 3 à 300, de manière préférée entre 5 et 150 et de manière encore préférée entre 10 et 100, par exemple, 20, 30 ou 50. L'augmentation du nombre d'éléments permet d'augmenter la surface totale en vis-à-vis des armatures 40 et 50 et par suite l'efficacité de l'amortissement. La distance, de préférence constante, entre deux éléments successifs est avantageusement comprise entre 0,01 millimètre et 30 millimètres, de préférence entre 0,08 millimètre et 0,2 millimètre.

Une ou plusieurs ouvertures axiales pratiquées dans les éléments 40.i et 50.i améliore d'une part l'ancrage du matériau non rigide sur ces éléments et, d'autre part, la diffusion de ce matériau dans la structure lors d'une étape de fabrication par injection ou moulage.

Un tel système permet ainsi d'amortir la transmission des vibrations du support de plaquette au piston 2.

Selon un mode de réalisation de l'invention, les armatures sont métalliques, en matériau composite par exemple à base de fibres de verre ou de fibres de carbone noyées dans un matériau synthétique, etc.

Les armatures sont noyées dans le matériau non rigide 9, solide. Avantageusemenmt, le matériau non rigide 9 disposé entre les armatures est monobloc. Ce matériau amortit les vibrations et résiste à la chaleur. Ce sera par exemple un matériau de type caoutchouc ou plastique présentant un bon coefficient d'amortissement aux efforts de cisaillement. Il pourra, par exemple, être réalisé en un matériau à base de plastomère, d'élastomère, ou un alliage de ces deux matériaux. Avantageusement, on utilise du nitrile.

Selon l'exemple de réalisation de la figure 2, l'amortisseur de vibration 4 remplit quasiment toute la cavité 3 du piston, mais cela n'est pas obligatoire.

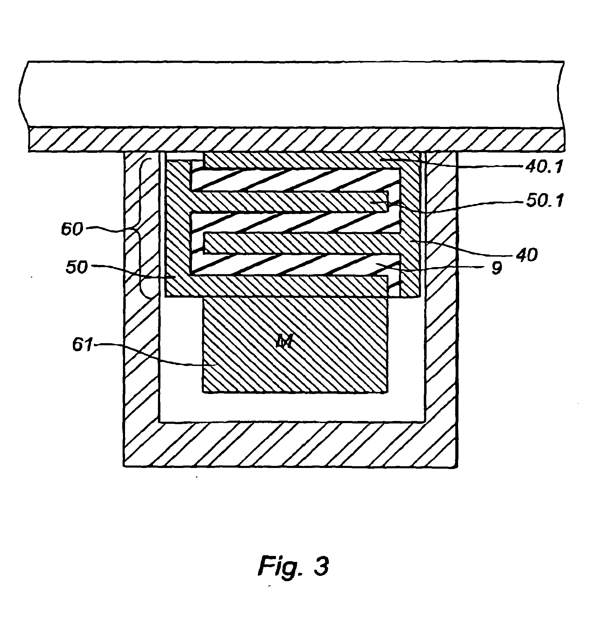

La figure 3 représente un autre mode de réalisation de l'invention. L'amortisseur comprend une partie amortisseur 60 du type décrit en relation avec la figure 2 et comprenant deux armatures 40 et 50 munies d'éléments intercalés les uns entre les autres tels que 40.1 et 50.1 et séparés par un matériau amortisseur de vibrations 9. Une armature, 40 par exemple, est fixée à la face 17a du support 17. Par contre l'autre armature 50 n'est pas fixée à la paroi interne de la cavité. Une masse 61 est fixée à la deuxième armature 50 et de préférence à un élément d'extrémité 50.n de cette armature. Cette masse possède un poids relativement élevé pour opposer une inertie suffisante de manière que d'éventuelles vibrations entraînent des mouvements relatifs des armatures 40 et 50 parallèlement au plan des éléments 40.i et 50.i pour amortir ces vibrations qui lui seront transmises par les éléments interdigités des deux armatures et par le matériau amortisseur 9.

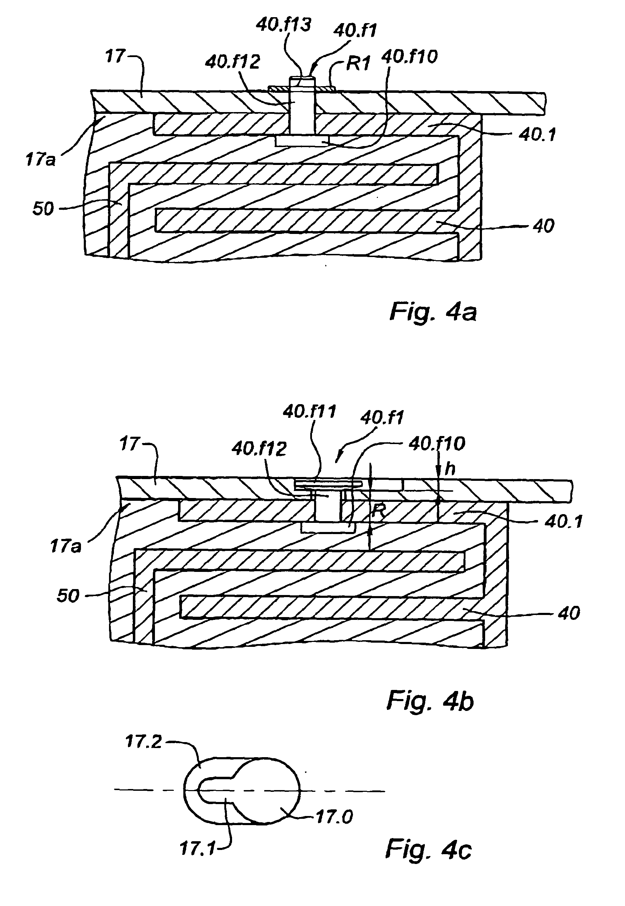

En se reportant aux figures 4a à 4c, on va décrire des modes de fixation du dispositif amortisseur à la face 17a du support de plaquette de frein 17.

La figure 4a représente un mode de fixation dans lequel un embout 40.f1 traverse l'épaisseur de l'élément 40.1 de l'armature 40 et possède une tête de maintien 40.f10 qui est noyé dans le dispositif amortisseur et qui empêchera à cet embout d'être arraché du dispositif amortisseur. L'autre extrémité est destinée à pénétrer à travers le support 17 de plaquette de frein et possède une rainure 40.f13 dans laquelle une rondelle R1 sera encliquetée.

Les figures 4b et 4c représentent un autre exemple de fixation. L'embout 40.f1 possède un corps 40.f12 qui traverse l'épaisseur de l'élément 40.1 et du support de plaquette 17. L'extrémité qui traverse le support 17 de plaquette de frein, possède une tête de blocage 40.f11 de diamètre (ou de largeur) plus grand que le diamètre (ou l'épaisseur) du corps 40.f12 de l'embout.

Par ailleurs, le support 17 possède une ouverture telle que représentée en vue de dessus en figure 4c et comportant un trou 17.0 permettant le passage de la tête de blocage 40.f11. Par exemple si la tête de blocage est de forme circulaire, l'ouverture est un trou circulaire de diamètre légèrement supérieur au diamètre de la tête de l'embout. Ce trou est prolongé par une ouverture 17.1 de largeur légèrement supérieure au diamètre (ou l'épaisseur) du corps 40.f12 de l'embout 40.f1. Pour fixer l'amortisseur sur le support 17, l'embout 40.f1 étant monté sur l'élément 40.1 de l'amortisseur, on fait passer la tête de blocage 40.f11 de l'embout dans le trou 17.0, puis on fait glisser latéralement l'amortisseur et l'embout de façon à amener l'embout dan la partie 17.1 de l'ouverture.

Pour obtenir un blocage efficace il faut prévoir une hauteur H de l'embout telle qu'elle corresponde à l'épaisseur (de l'élément 40.1 et de la plaquette 17) que l'embout doit enserrer entre la tête de maintien 40.f10 et la tête de blocage 40.f11. Pour facilité le blocage, on peut prévoir que les faces inférieures (sur la figure 4a) de la tête de blocage soient coniques (ou inclinées).

Il est également possible de prévoir entre la face 17a du support 17 et l'élément 40.1 de l'amortisseur une couche d'un matériau déformable.

Pour que l'embout ne gêne pas le montage des plaquettes de freins on peut prévoir de noyer la tête de blocage 40.f11 dans l'épaisseur du support 17. Pour cela, on prévoira un fraisage 17.2 du support à un diamètre supérieur au diamètre de la tête de blocage et une profondeur h supérieure à l'épaisseur de la tête de blocage.

Comme mentionné précédemment, on peut prévoir plusieurs dispositifs de fixation pour le montage d'un amortisseur sur un support de plaquette de frein.

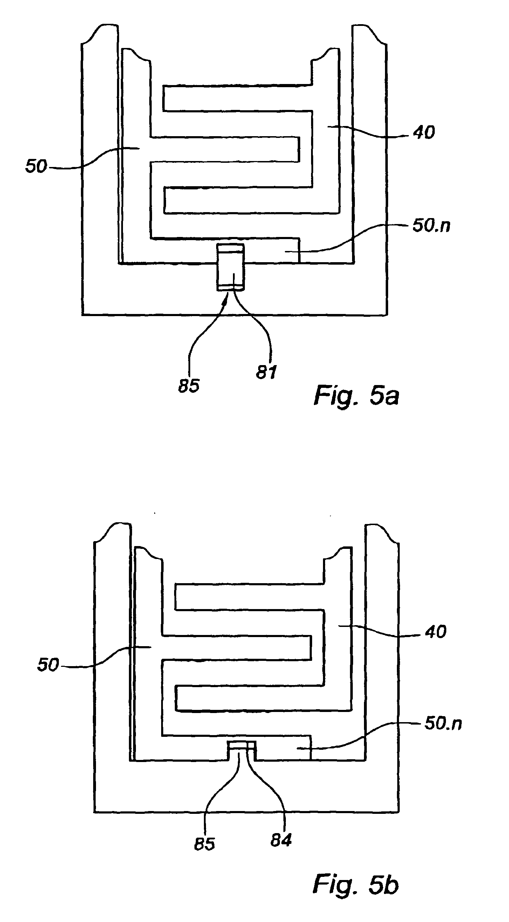

En se reportant aux figures 5a et 5b on va décrire des modes de fixations d'un amortisseur tel que ce lui de la figure 2 à l'intérieur de la cavité 3 du piston 2.

Sur la figure 5a, un ergot 81 est prévu dans un trou 82 situé dans le fond de la cavité du piston. L'armature 50.n possède un trou dans lequel est situé l'ergot qui empêche l'armature de bouger latéralement.

La figure 5b est une variante de la figure 5a selon laquelle, l'ergot 83 fait partie du fond de la cavité du piston et s'emboîte dans un trou 84 de l'armature 50.

Selon une variante de l'invention, les éléments 40.1 à 40.n et/ou 50.1 à 50.n présentent un angle non nul avec le plan du disque, cet angle pouvant atteindre 90°

## Revendications

1. Amortisseur de vibrations pour freins à disques de véhicule, comportant une première armature rigide (40) munie d'une pluralité d'éléments rigides (40.1, 40.2, 40.3, 40.n) surfaciques et reliés entre eux rigidement, une deuxième armature (50) munie d'une pluralité d'éléments rigides (50.1, 50.2, 50.n) surfaciques et reliés entre eux rigidement ; les éléments de la première et de la deuxième armature (40, 50) étant intercalés et disposés en vis-à-vis, et un matériau non rigide (9) à base de plastomère, d'élastomère ou d'un alliage de ces deux matériaux, étant placé entre les différents éléments des deux armatures **caractérisé en ce que** ladite première (40) armatures comporte des moyens de fixation à un support (17) de garniture de frein, la deuxième armature rigide (50) n'étant pas fixée audit support (17).

2. Amortisseur de vibrations pour freins de véhicule selon la revendication 1, **caractérisé en ce que** les éléments rigides (40.1 à 40.n, 50.1 à 50.n) sont plans et parallèles entre eux

3. Amortisseur de vibrations pour freins de véhicule selon l'une quelconque des revendications 1 à **2, caractérisé en ce que** le matériau non rigide (9) placé entre les différents éléments des deux armatures possède un coefficient d'amortissement par cisaillement élevé.

4. Amortisseur de vibrations pour freins de véhicule selon l'une quelconque des revendications 1 à **3, caractérisé en ce qu'**il comporte un composant (61) présentant une masse fixée à la deuxième armature (50.

5. Amortisseur de vibrations pour freins de véhicule selon la revendication **4, caractérisé en ce que** la masse est fixée sur un élément (50.n) de la deuxième armature opposé audit support de plaquette de frein (17) par rapport auxdites armatures.

6. Piston de frein à disques comportant une cavité **caractérisé en ce qu'**il comporte un amortisseur selon l'une quelconque des revendications 1 à **5** placé dans ladite cavité (3).

7. Piston de frein selon la revendication **6, caractérisé en ce que** ladite deuxième armature (50) est fixée à l'intérieur de la cavité (3) du piston (2).

8. Piston de frein selon la revendication **7, caractérisé en ce que** ladite deuxième armature (50) comporte des moyens de solidarisation avec le fond de la cavité du piston.

9. Piston de frein selon l'une des revendications **6** à **8, caractérisé en ce que** le dispositif amortisseur de vibrations remplit la quasi-totalité de la cavité (3) tout en permettant un mouvement latéral de la première armature par rapport à la deuxième armature.

10. Piston de frein à disques selon l'une quelconque des revendications **6** à **9, caractérisé en ce que** l'amortisseur est positionné dans ladite cavité de telle façon que les éléments desdites armatures puissent être sensiblement parallèles au plan d'un disque de frein.

11. Frein comportant un amortisseur selon l'une quelconque des revendications 1 à **5** et/ou un piston selon l'une quelconque des revendications **6** à **10.**

12. Frein selon la revendication **11 caractérisé en ce qu'**il comporte des moyens de solidarisation de la première armature (40) à un support de garniture de frein.

## Claims

1. Vibration damper for vehicle disc brakes, comprising a first rigid armature (40) equipped with a plurality of rigid surface elements (40.1, 40.2, 40.3, 40.n) which are rigidly joined together, a second armature (50) equipped with a plurality of rigid surface elements (50.1, 50.2, 50.n) joined together rigidly; the elements of the first and of the second armature (40, 50) being interpolated and positioned facing one another, and a non-rigid material (9), based on plastomer, elastomer or an alloy of these two materials, the said vibration damper being positioned between the various elements of the two armatures, **characterized in that** the said first armature (40) comprises means of attachment to a brake lining backing plate (17), the second rigid armature (50) not being fixed to the said backing plate (17).

2. Vibration damper for vehicle brakes according to Claim 1, **characterized in that** the rigid elements (40.1 to 40.n, 50.1 to 50.n) are planar and mutually parallel.

3. Vibration damper for vehicle brakes according to either one of Claims 1 and 2, **characterized in that** the non-rigid material (9) placed between the various elements of the two armatures has a high coefficient of damping in shear.

4. Vibration damper for vehicle brakes according to any one of Claims 1 to 3, **characterized in that** it comprises a component (61) that has a mass fixed to the second armature (50).

5. Vibration damper for vehicle brakes according to Claim 4, **characterized in that** the mass is fixed to an element (50.n) of the second armature on the opposite side of said armatures to the said brake pad backing plate (17).

6. Disc brake piston comprising a cavity, **characterized in that** it comprises a damper according to any one of Claims 1 to 5 positioned in the said cavity (3).

7. Brake piston according to Claim 6, **characterized in that** the said second armature (50) is fixed to the inside of the cavity (3) of the piston (2).

8. Brake piston according to Claim 7, **characterized in that** the said second armature (50) comprises means of attachment to the end wall of the piston cavity.

9. Brake piston according to one of Claims 6 to 8, **characterized in that** the vibration damper device fills almost all of the cavity (3) while at the same time allowing the first armature some lateral movement with respect to the second armature.

10. Disc brake piston according to any one of Claims 6 to 9, **characterized in that** the damper is positioned in the said cavity in such a way that the elements of the said armatures can be substantially parallel to the plane of a brake disc.

11. Brake comprising a damper according to any one of Claims 1 to 5 and/or a piston according to any one of Claims 6 to 10.

12. Brake according to Claim 11, **characterized in that** it comprises means of securing the first armature (40) to a brake lining backing plate.

## Patentansprüche

1. Schwingungsdämpfer für Scheibenbremsen eines Kraftfahrzeugs, mit einer ersten starren Armierung (40) mit einer Vielzahl von starren Elementen (40.1, 40.2, 40.3, 40.n) versehen ist, die flächig und untereinander starr verbunden sind, einer zweiten Armierung (50), die mit einer Vielzahl von starren Elementen (50.1, 50.2, 50.3, 50.n) versehen ist, die flächig und untereinander starr verbunden sind, wobei die Elemente der ersten und der zweiten Armierung (40, 50) ineinander verschachtelt sind und einander gegenüberliegen, und wobei ein nicht starres Material (9) auf der Basis von Plastomer, Elastomer oder einen Verbund aus diesen beiden Materialen zwischen den verschiedenen Elementen der beiden Armierungen eingelegt ist, **dadurch gekennzeichnet, dass** die erste Armierung (40) Mittel zur Befestigung an einem Bremsklotzträger (17) aufweist, wobei die zweite starre Armierung (50) nicht am Träger (17) befestigt ist.

2. Schwingungsdämpfer für Scheibenbremsen eines Kraftfahrzeugs nach Anspruch 1, **dadurch gekennzeichnet, dass** die starren Elemente (40.1 bis 40.n, 50.1 bis 50.n) plan und unter einander parallel sind.

3. Schwingungsdämpfer für Scheibenbremsen eines Kraftfahrzeugs nach einem der Ansprüche 1 bis 2, **dadurch gekennzeichnet, dass** das zwischen den verschiedenen Elementen der beiden Armierungen eingelegte nicht starre Material (9) einen hohen Schubdämpfungskoeffizienten besitzt.

4. Schwingungsdämpfer für Scheibenbremsen eines Kraftfahrzeugs nach einem der Ansprüche 1 bis 3, **dadurch gekennzeichnet, dass** er einen Bestandteil (61) aufweist, die eine an der zweiten Armierung (50) befestigten Masse umfasst.

5. Schwingungsdämpfer für Scheibenbremsen eines Kraftfahrzeugs nach Anspruch 4, **dadurch gekennzeichnet, dass** die Masse an einem Element (50.n) der zweiten Armierung befestigt ist, das dem Bremsklotzträger (17) bezüglich der Armierungen entgegengesetzt ist.

6. Scheibenbremsenkolben mit einer Aufnahme, **dadurch gekennzeichnet, dass** er einen Dämpfer nach einem der Ansprüche 1 bis 5 aufweist, der in der Aufnahme (3) eingelegt ist.

7. Scheibenbremsenkolben nach Anspruch 6, **dadurch gekennzeichnet, dass** die zweite Armierung (50) innerhalb der Aufnahme (3) des Kolbens (2) befestigt ist.

8. Scheibenbremsenkolben nach Anspruch 7, **dadurch gekennzeichnet, dass** die zweite Armierung (50) Mittel zur festen Verbindung mit dem Boden der Aufnahme des Kolbens aufweist.

9. Scheibenbremsenkolben nach einem der Ansprüche 6 bis 8, **dadurch gekennzeichnet, dass** der Schwingungsdämpfer beinahe die Gesamtheit der Aufnahme (3) füllt, wobei er eine seitliche Bewegung der ersten Armierung bezüglich der zweiten Armierung ermöglicht.

10. Scheibenbremsenkolben nach einem der Ansprüche 6 bis 9, **dadurch gekennzeichnet, dass** der Schwingungsdämpfer in der Aufnahme so positioniert ist, dass die Elemente der Armierungen im Wesentlichen parallel zur Ebene einer Bremsscheibe sein können.

11. Bremse mit einem Dämpfer nach einem der Ansprüche 1 bis 5 und/oder einem Kolben nach einem der Ansprüche 6 bis 10.

12. Bremse nach Anspruch 11, **dadurch gekennzeichnet, dass** sie Mittel zum festen Verbinden der ersten Armierung (40) mit einem Bremsklotzträger aufweist.
